# EUROPEAN PATENT APPLICATION

(11) **EP 4 653 937 A1**
(43) Date of publication of application: **26.11.2025**
(21) Application number: 25177475.8
(22) Date of filing: 19.05.2025
(51) Int. Cl.: G02B 26/10

(54) **ADAPTIVE SELF-CALIBRATION OF A LASER BEAM SCANNING DISPLAY**

(30) Priority: 24.05.2024 US 202418674326
(71) Applicant: Microsoft Technology Licensing, LLC, Redmond, WA 98052 (US)
(72) Inventor: LIAO, Wenjun, Redmond, Washington, 98052 (US); SUN, Ruipeng, Redmond, Washington, 98052 (US); PU, Chuan, Redmond, Washington, 98052 (US)
(74) Representative: CMS Cameron McKenna Nabarro Olswang LLP

(57) **Abstract**

Techniques for determining parameters for a dampener are disclosed. A system includes a laser beam scanning (LBS) display device comprising FS and SS mirrors. The LBS display device is driven by an input control signal. **In** response to detecting a condition, a service initiates a recalibration event for the LBS display device. This event involves the determination of control parameters for a dampener that will be applied to the input control signal. The dampener operates to attenuate a peak magnitude of a frequency response of the SS mirror to a peak value that is at or below a threshold value. The service configures the dampener using the control parameters. The service then applies the dampener to the input control signal, resulting in the peak magnitude of the SS mirror's frequency response being at or below the threshold value.

## Description

### BACKGROUND

Head mounted devices (HMD), or other wearable devices, are becoming highly popular. These types of devices are able to provide a so-called "extended reality" experience.

The phrase "extended reality" (XR) is an umbrella term that collectively describes various different types of immersive platforms. Such immersive platforms include virtual reality (VR) platforms, mixed reality (MR) platforms, and augmented reality (AR) platforms. The XR system provides a "scene" to a user. As used herein, the term "scene" generally refers to any simulated environment (e.g., three-dimensional (3D) or two-dimensional (2D)) that is displayed by an XR system.

For reference, conventional VR systems create completely immersive experiences by restricting their users' views to only virtual environments. This is often achieved through the use of an HMD that completely blocks any view of the real world. Conventional AR systems create an augmented-reality experience by visually presenting virtual objects that are placed in the real world. Conventional MR systems also create an augmented-reality experience by visually presenting virtual objects that are placed in the real world, and those virtual objects are typically able to be interacted with by the user. Furthermore, virtual objects in the context of MR systems can also interact with real world objects. AR and MR platforms can also be implemented using an HMD. XR systems can also be implemented using laptops, handheld devices, and other computing systems.

Unless stated otherwise, the descriptions herein apply equally to all types of XR systems, which include MR systems, VR systems, AR systems, and/or any other similar system capable of displaying virtual content. An XR system can be used to display various different types of information to a user. Some of that information is displayed in the form of a "hologram." As used herein, the term "hologram" generally refers to image content that is displayed by an XR system. In some instances, the hologram can have the appearance of being a 3D object while in other instances the hologram can have the appearance of being a 2D object.

The XR system can generate a hologram by using mirrors to direct a laser beam onto a display region. The mirrors may move over the course of a frame to control the location in the display region toward which the laser beam is directed, resulting in a pixel in the display being "painted" with light. The mirrors may be moved using a microelectromechanical system (MEMS) driver. The MEMS drivers may be driven using a periodic electrical signal, or more generally, an input control signal.

The MEMS system typically includes two mirrors, which include a fast scanning (FS) mirror and a slow scanning (SS) mirror. The FS mirror is designed to direct light to individual pixels within a row of pixels. The SS mirror is designed to shift the focus of the FS mirror from one row to the next row. The combination of these mirrors allows the MEMS system to generate an entire image in the display.

It is often desirable for the MEMS driver of the FS mirror to be driven at a frequency close to its resonant frequency. The MEMs driver for the SS mirror, on the other hand, is often driven by a different signal. However, due to changes in environmental conditions, wear and tear on display device components, and/or other changes to the display device, the resonant frequency of the MEMS driver may change. Notably, it is often the case that the FS mirror's resonance is around 28 KHz. Similar to how fast moving fans accumulate dust, the FS mirror can also accumulate environmental particles. More accumulated particles results in a different resonance. This change makes the resonance drive downward with the operational time. Thus, when changes to the resonant frequency occur, the efficiency of the MEMS driver may be reduced due to the MEMS driver being driven at a frequency other than its resonant frequency. Imprecise control of the mirrors due to changes in resonant frequency may result in distortion of the displayed image/hologram. Similarly, deviations from the FS mirror's resonance could lead to a higher power consumption. For instance, if the resonance drift is greater than about 20 Hz, the MEMs driver might not drive the FS mirror to the desired angle. Also, the heat generated by the inefficient MEMs driver could burn out the MEMs driver.

In some existing systems, a number of control loops are required to coordinate with one another in order to detect and accommodate changes in the resonant frequency. For instance, in order for the FS mirror to operate at its resonance, multiple controllers of the FS mirror must coordinate with each other and with controllers of the SS mirror. This coordination requires each controller to have the necessary wiring and functionality to communicate with one another.

As mentioned above, the FS mirror typically oscillates about a first axis under resonance. The SS mirror typically oscillates about a second axis that is perpendicular to the first axis. In this manner, the FS mirror and the SS mirror can perform a raster scan of the laser beam onto the display region. Resonance of the FS mirror increases the efficiency with which the FS mirror operates; whereas, resonance of the SS mirror negatively impacts linearity of the SS mirror.

In addition, it takes a number of computational resources for each controller to determine a change of a resonant frequency of a mirror and communicate the detected resonant frequency to the SS mirror controller. In turn, the SS mirror controller has to have the capabilities to process the signal indicating the resonant frequency and coordinate that input with a frame rate of the input media defining the displayed images.

This type of architecture can be expensive from a computational resource standpoint. The high complexity of existing systems leads to high power consumption and low control efficiency and power efficiency. In addition, the complex coordination required by existing architectures does not always lead to optimal stability with respect to image quality. Each controller may not have the ability to react quickly enough when there are large swings in a resonant frequency of a mirror. Given that the mirror property variations (e.g., for the SS mirror) are unpredictable and given the fact that the resonant frequency could vary beyond the controllable range of the system, the complex coordination of the various control loops of existing devices can be ineffective as it is challenging to predict all possible use scenarios. It should be noted how FS mirrors and SS mirrors have different issues. FS mirror drift and the control system tracks this drift and adjusts the parameters to drive the FS mirror at its resonance. SS mirror mode 3 (to be discussed in more detail later) could change dramatically. As a result, it is desirable to suppress mode 3. Given these issues, there is an ongoing need to improve the robustness and efficiency of laser beam scanning devices.

The subject matter claimed herein is not limited to embodiments that solve any disadvantages or that operate only in environments such as those described above. Rather, this background is only provided to illustrate one exemplary technology area where some embodiments described herein may be practiced.

### BRIEF SUMMARY

In some aspects, the techniques described herein relate to a computer system including: a laser beam scanning (LBS) display device including a fast scanning (FS) mirror and a slow scanning (SS) mirror, the LBS display device being driven by an input control signal; a processor system; and a storage system that stores instructions that are executable by the processor system to cause the computer system to: establish a condition that, when detected, triggers a re-calibration event for the LBS display device; in response to detecting the condition, initiate the re-calibration event for the LBS display device, wherein the re-calibration event includes: determining a resonance frequency of the SS mirror; based on the determined resonance frequency, determining a set of control parameters for a dampener that will subsequently be applied to the input control signal, wherein: the dampener, when applied to the input control signal, operates to attenuate a peak magnitude of a frequency response of the SS mirror to a peak value that is at or below a threshold value, and the threshold value is one where, when the peak magnitude of the SS mirror's frequency response is at or below the threshold value, distorting movements of the SS mirror are dampened; configure the dampener using the set of control parameters; and after the dampener is configured using the set of control parameters, apply the dampener to the input control signal resulting in the peak magnitude of the SS mirror's frequency response being at or below the threshold value.

In some aspects, the techniques described herein relate to an extended reality (XR) system including: a laser beam scanning (LBS) display device including a fast scanning (FS) mirror and a slow scanning (SS) mirror, the LBS display device being driven by an input control signal; a processor system; and a storage system that stores instructions that are executable by the processor system to cause the XR system to: establish a condition that, when detected, triggers a re-calibration event for the LBS display device; in response to detecting the condition, initiate the re-calibration event for the LBS display device, wherein the re-calibration event includes: determining a resonance frequency of the SS mirror; based on the determined resonance frequency, determining a set of control parameters for a dampener that will subsequently be applied to the input control signal, wherein: the dampener, when applied to the input control signal, operates to attenuate a peak magnitude of a frequency response of the SS mirror to a peak value that is at or below a threshold value, and the threshold value is one where, when the peak magnitude of the SS mirror's frequency response is at or below the threshold value, distorting movements of the SS mirror are dampened; configure the dampener using the set of control parameters; and after the dampener is configured using the set of control parameters, apply the dampener to the input control signal resulting in the peak magnitude of the SS mirror's frequency response being at or below the threshold value.

In some aspects, the techniques described herein relate to a method involving a laser beam scanning (LBS) display device including a fast scanning (FS) mirror and a slow scanning (SS) mirror, the LBS display device being driven by an input control signal, wherein the method includes: establishing a condition that, when detected, triggers a re-calibration event for the LBS display device; in response to detecting the condition, initiating the re-calibration event for the LBS display device, wherein the re-calibration event includes: determining a resonance frequency of the SS mirror; based on the determined resonance frequency, determining a set of control parameters for a dampener that will subsequently be applied to the input control signal, wherein: the dampener, when applied to the input control signal, operates to attenuate a peak magnitude of a frequency response of the SS mirror to a peak value that is at or below a threshold value, and the threshold value is one where, when the peak magnitude of the SS mirror's frequency response is at or below the threshold value, distorting movements of the SS mirror are dampened; configuring the dampener using the set of control parameters; and after the dampener is configured using the set of control parameters, applying the dampener to the input control signal resulting in the peak magnitude of the SS mirror's frequency response being at or below the threshold value.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional features and advantages will be set forth in the description which follows, and in part will be obvious from the description, or may be learned by the practice of the teachings herein. Features and advantages of the invention may be realized and obtained by means of the instruments and combinations particularly pointed out in the appended claims. Features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features can be obtained, a more particular description of the subject matter briefly described above will be rendered by reference to specific embodiments which are illustrated in the appended drawings. Understanding that these drawings depict only typical embodiments and are not therefore to be considered to be limiting in scope, embodiments will be described and explained with additional specificity and detail through the use of the accompanying drawings in which:
Figure 1 illustrates an example chart outlining various changes to an SS's mirror frequency behavior.
Figure 2A illustrates an example computing architecture for dynamically determining certain control parameters.
Figure 2B outlines some of those control parameters and mirror properties.
Figure 3 illustrates an example HMD.
Figure 4 illustrates an example process flow.
Figure 5 illustrates a chart of various SS mirror gain distributions.
Figure 6 illustrates a chart of various frequency responses of a mirror.
Figures 7A and 7B further illustrate various frequency responses of a mirror.
Figure 8 illustrates a flowchart of an example method for determining control parameters.
Figure 9 illustrates an example computer system that can be configured to perform any of the disclosed operations.

### DETAILED DESCRIPTION

As mentioned previously, XR systems often include a laser beam scanning (LBS) display with two scanning MEMS mirrors. The FS mirror scans under resonance, and the SS mirror scans linearly.

The FS mirror and SS mirror are analog devices and may be impacted by a variety of factors. For example, the SS mirror resonances are different from device to device. Also, the SS mirror can drift over time due to assembling methods, adhesives, temperature, and so on. In many instances, the SS mirror resonances are different each time the system (e.g., the XR system) boots up.

An SS mirror may be modeled as a system with multiple forced mass-damper-spring sub-systems connected in parallel. For instance, each forced mass-damper-spring sub-system may correspond to a respective resonant frequence of the SS mirror. An equivalent circuit for the SS mirror may include multiple RLC circuits. For instance, each RLC circuit may include a resistor R, an inductor L, and a capacitor C connected in series. Each RLC circuit may correspond to a respective resonant frequency of the SS mirror.

The SS mirror is configured to move ( e.g., oscillate, resonate) in response to receipt of a drive signal (aka an input control signal). For instance, movement of the SS mirror may be based at least in part on an amplitude, frequency, and/or phase of the drive signal.

Variations in the behavior of the mirrors, particularly the SS mirror, can occur due to changes in operational conditions. In the mirror control system, sometimes these variations are too large to compensate for with fixed parameters, especially during the system's start up.

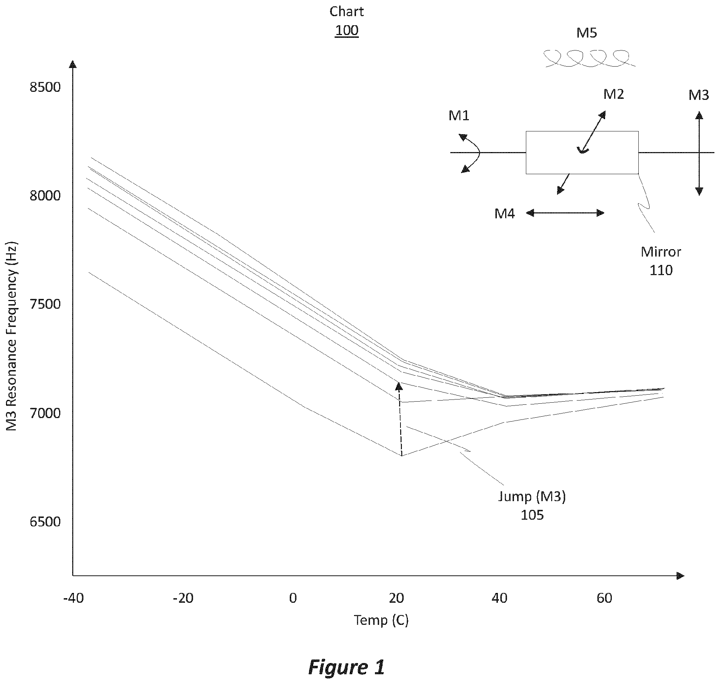

One example is shown in Figure 1 by chart 100. Chart 100 shows various resonant frequencies for the SS mirror recorded at different times. For instance, chart 100 plots seven different resonant frequencies, which may occur during different operational conditions of the SS mirror. Each of the resonant frequencies represents a resonating movement of the SS mirror. The jump 105 (e.g., for Mode 3, to be discussed next) illustrates differences between these resonant frequencies.

Figure 1 also shows a mirror 110, which is representative of the SS mirror discussed herein. Mirror 110 has a rotation axis, as shown by the line through the center of the mirror. Mode 1 (aka "M1") refers to the rotation of the mirror, as illustrated by the curved line next to M1. Mode 2 (aka "M2") refers to an up/down movement of the mirror 110, similar to the movement of a piston. Mode 3 (aka "M3") refers to an in-plane movement of the mirror 110. Mode 4 (aka "M4") refers to another planar movement of the mirror 110. Modes M3 and M4 are often viewed as being similar to one another, at least with respect to their similar impact on the mirror 110. Mode 5 (aka "M5") refers to a twisting movement of the mirror 110. There are additional modes (e.g., M6 to M12), but those modes are quite small (e.g., well below 0 dB) as compared to modes M1 to M5. Thus, some embodiments can elect to ignore modes M6 to M12.

Movements (in these modes) that exceed a threshold amount of movement can result in the destruction of the mirror 110. As such, it is generally desirable to suppress these modes (and their related movements) for the SS mirror, with particular emphasis given to modes M1, M3, and M4 because these are the modes that vary significantly based on changing operational conditions. Modes M2 and M5 are often more stable, or rather predictable. As a result, the suppression of modes M2 and M5 can involve the use of fixed parameters for a dampening component (e.g., a notch filter) whereas the suppression of modes M1, M3, and M4 benefit from the use of dynamic control parameters.

Thus, the disclosed principles are particularly useful for those modes that have a variable amount of variation based on different operating conditions. The disclosed suppression techniques help reduce the amount of strain that the mirrors are subjected to, thereby increasing the lifespan of the mirror 110 as well as the resulting imagery produced by the mirror 110.

In Figure 1, the SS mirror resonance for Mode 3 (aka "M3") hops or jumps (e.g., as shown by Mode 3 jump 105) several hundred Hz overtime. That is, M3 of the SS mirror is shown as having multiple different resonances based on different conditions (e.g., different temperature cycles or profiles) in which the SS mirror is operating. If appropriate corrections are not applied before the mirror starts to operate, the SS mirror might break due to extreme and uncontrolled movement, as discussed previously. Consequently, the entire system could fail by not displaying content. It is also worthwhile to note that it is difficult to accurately predict how much change or jump might occur for modes M1, M3, and M4. The embodiments are able to use an adaptive dampener (e.g., an adaptive "notch filter" or simply "filter") to accurately maintain and hold proper resonance for the SS mirror.

Stated differently, the embodiments are designed to dynamically determine and adjust parameters of a dampener (e.g., a notch filter) to track a resonant frequency (aka resonance frequency) of an SS mirror. In particular, the embodiments are able to adjust a notch frequency of the adaptive notch filter to track the changing resonant frequency of the SS mirror. As used herein, a "notch frequency" refers to a frequency that the notch filter is configured to suppress (i.e. attenuate). A resonant frequency of an SS mirror is a frequency at which the SS mirror resonates. For instance, a magnitude of a frequency response of the SS mirror may be a relative maximum at the resonant frequency. An adaptive notch filter is a notch filter having a notch frequency that is adjustable. The notch frequency can beneficially be adjusted to compensate for changes in performance attributes of the SS mirror, where those change may result from changes in environmental conditions (e.g., temperature) of the SS mirror.

Making these adjustments enables a combination of the notch filter and the SS mirror to maintain a substantially constant (e.g., flat or at least relative flatter as compared to its previous, non-filtered state) magnitude frequency response. By maintaining the substantially constant magnitude frequency response, accuracy of a displayed image that results from reflection of light from the SS mirror may be increased. The embodiments also increase the reliability of the SS mirror (e.g., by stabilizing the movement of the SS mirror).

Another challenge addressed by the disclosed embodiments occurs after the system is delivered to customers. That is, it is sometimes the case that the capability to remotely change the control parameters to accommodate the latest mirror changes are no longer available once the customer has the XR system. If compensations are not made for these variations from time to time, the display system might fail. At minimum, it might be the case that the system does not have the optimal performances as designed.

To overcome these variation and reliability issues, the disclosed embodiments are directed to techniques that improve the system's boot up design to enable the system to calibrate the mirror control system parameters automatically. A new boot up detection algorithm is beneficially able to track multiple FS and SS variations in a wide range overtime. Additionally, the disclosed embodiments are able to compensate for the system performance degradation due to these variations.

Accordingly, the disclosed embodiments are able to provide significant improvements, benefits, and practical applications in how display devices (e.g., XR systems) operate. That is, the disclosed embodiments not only improve the quality of the resulting imagery produced by a display device, but they also improve the functionality of the display device itself as well as the device's reliability. As mentioned previously, if left unchecked, situations may arise where the mirrors in the display device break. The disclosed embodiments provide enhanced calibration mechanisms to ensure that this physical breaking of the mirrors is avoided. By "calibration," it is generally meant that the display device (e.g., the MEMS system) is calibrated by dynamically configuring a notch filter in a manner so as to protect the MEMS system's mirrors by dampening or suppressing the peak magnitude of the mirror's frequency response, particularly at the resonance frequency, thereby suppressing the unwanted movements for the mirror's modes. As a result, the embodiments safeguard and protect the underlying components of the display device.

Additionally, the disclosed embodiments can beneficially shut down the system when unexpected events occur, such as when mode 3 of the SS mirror jumps. The embodiments can advantageously reboot the system, thereby triggering the embodiments/system to readjust the notch filter parameters and to recover the system functions. As a result, the embodiments facilitate disaster protection and self-recovery, or rather, self-calibration. Accordingly, these and numerous other benefits will now be described in more detail throughout the remaining sections of this disclosure.

### Example Computing Architecture

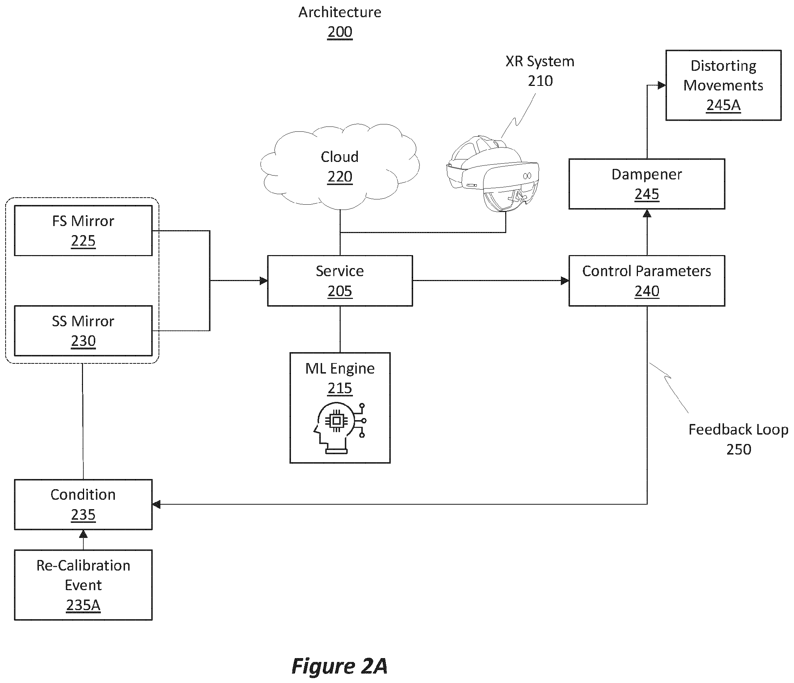

Having just described some of the high level benefits, advantages, and practical applications achieved by the disclosed embodiments, attention will now be directed to Figure 2A, which illustrates an example computing architecture 200 that can be used to achieve those benefits.

Architecture 200 includes a service 205, which can be implemented by an XR system 210 comprising an HMD. As used herein, the phrases XR system, HMD, platform, display device, or wearable device can all be used interchangeably and generally refer to a type of system that displays holographic content (i.e. holograms). In some cases, XR system 210 is of a type that allows a user to see various portions of the real world and that also displays virtualized content in the form of holograms. That ability means XR system 210 is able to provide so-called "passthrough images" to the user. It is typically the case that architecture 200 is implemented on an MR or AR system, though it can also be implemented in a VR system.

As used herein, the term "service" refers to an automated program that is tasked with performing different actions based on input. In some cases, service 205 can be a deterministic service that operates fully given a set of inputs and without a randomization factor. In other cases, service 205 can be or can include a machine learning (ML) or artificial intelligence engine, such as ML engine 215. The ML engine 215 enables the service to operate even when faced with a randomization factor.

As used herein, reference to any type of machine learning or artificial intelligence may include any type of machine learning algorithm or device, convolutional neural network(s), multilayer neural network(s), recursive neural network(s), deep neural network(s), decision tree model(s) (e.g., decision trees, random forests, and gradient boosted trees) linear regression model(s), logistic regression model(s), support vector machine(s) ("SVM"), artificial intelligence device(s), or any other type of intelligent computing system. Any amount of training data may be used (and perhaps later refined) to train the machine learning algorithm to dynamically perform the disclosed operations.

In some implementations, service 205 is a cloud service operating in a cloud 220 environment. In some implementations, service 205 is a local service operating on a local device, such as the XR system 210. In some implementations, service 205 is a hybrid service that includes a cloud component operating in the cloud 220 and a local component operating on a local device. These two components can communicate with one another. Optionally, the XR system can send data to a cloud service, which may then be tasked with determining statistic data for variations. The various different control parameters can optionally be updated based on data mining and artificial intelligence (AI) learning that results from the cloud service's analysis.

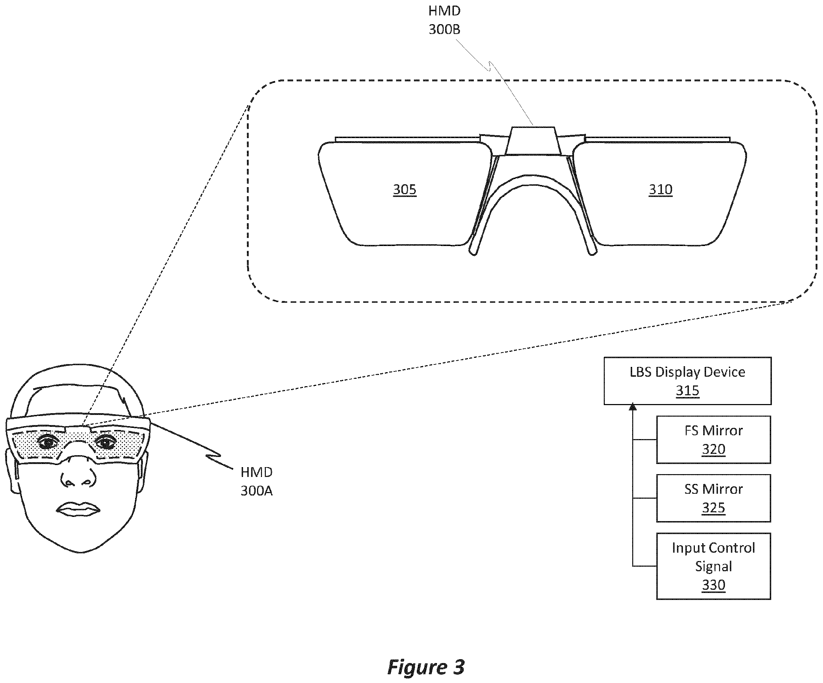

Turning briefly to Figure 3, HMDs 300A and 300B are shown, where these HMDs are representative of the XR system 210 of Figure 2A. HMD 300B includes a left display 305, and a right display 310. HMD 300B is thus configured to provide binocular vision to the user. That is, HMD 300B displays a first image in the left display 305 and a second, different image in the right display 310. The user will view these two separate images, and the user's mind can fuse them, thereby allowing the user to perceive depth with respect to the holograms.

HMD 300B can implement the scanning technique described previously with respect to displaying an image. For instance, HMD 300B can include a laser beam scanning (LBS) display device 315 comprising a fast scanning (FS) mirror 320 and a slow scanning (SS) mirror 325. The LBS display device can be driven by an input control signal 330. The input control signal 330 drives the LBS display device 315 to display content on one or more of the left display 305 and the right display 310.

Returning to Figure 2A, service 205 is generally involved with supplementing a boot up operation by concurrently determining certain control parameters that are used to configure a notch filter (i.e. a type of signal dampener). In particular, service 205 facilitate a boot up detection algorithm for the XR system 210's mirror control system. This boot up detection algorithm is able to determine when the XR system 210 is undergoing a boot up operation. When the boot up operation is detected by the boot up detection algorithm, the algorithm can then trigger additional operations of service 205. At a high level, those additional operations involve determining certain control parameters, which will be described shortly.

Generally, service 205 enables the XR system 210 to test the FS mirror 225 and the SS mirror 230 (and/or other components) during the XR system 210's boot up. This boot up operation is one condition 235 that can be used to trigger the disclosed operations. As will be discussed in more detail later, other conditions can also trigger the disclosed operations.

Based on the measured results from the tests, service 205 calculates and then automatically applies new control parameters 240 to the system (e.g., to the system's notch filter, which is a type of dampener 245) during the current boot up, as shown by the feedback loop 250. Such operations can constitute a re-calibration event 235A. After that, the system's display starts with optimized performance based on the control parameters 240. Thus, each time the XR system 210 boots up, new control parameters 240 are computed and are used until such time as the XR system 210 boots up again. These operations are performed in an attempt to dampen, suppress, or even eliminate various distorting movements 245A of at least one of the FS mirror 225 or the SS mirror 230.

The control parameters 240 can include multiple different parameters. Examples of these parameters include, but are not necessarily limited to, the mirror's (e.g., SS mirror or FS mirror) resonance frequency (e.g., peak height and frequency position), the notch filter's depth (e.g., the amount by which the resonance frequency is to be attenuated), and the notch filter's width (e.g., the bandwidth of the signal that is to be suppressed).

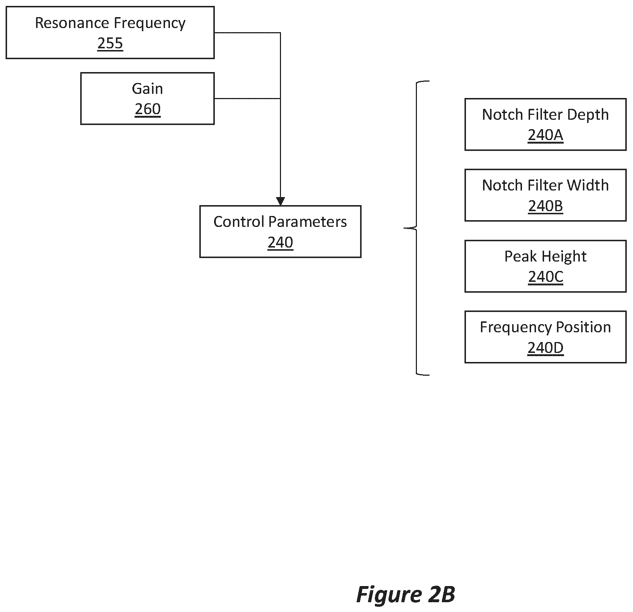

Figure 2B shows some additional details regarding the control parameters 240. In accordance with the disclosed principles, the embodiments are able to determine (e.g., during a startup sweep operation) the resonance frequency 255 of the FS mirror and the gain 260 of the SS mirror. Additionally, the startup sweep operation can detect several parameters for autotuning, which may be used for other scenarios. Regarding the FS resonance, the embodiments can optionally track the drive of the FS mirror at its resonance. Regarding the SS modes (especially M3, M4), the embodiments can configure a notch filter to suppress these modes. Regarding the SS mirror gain, the embodiments can keep the control loop gain constant and stabilize the display images.

Using the above information, the embodiments can then determine the control parameters 240 (and mirror properties), which, as mentioned above, may include the notch filter depth 240A, the notch filter width 240B, the peak height 240C (i.e. a mirror property) that will result (i.e. the amount by which the notch filter is to reduce the peak magnitude of the SS mirror's frequency response), and the frequency position 240D at which the notch filter is to operate. It should be noted how the peak height 240C is a mirror property and may not necessarily be considered as a control parameter.

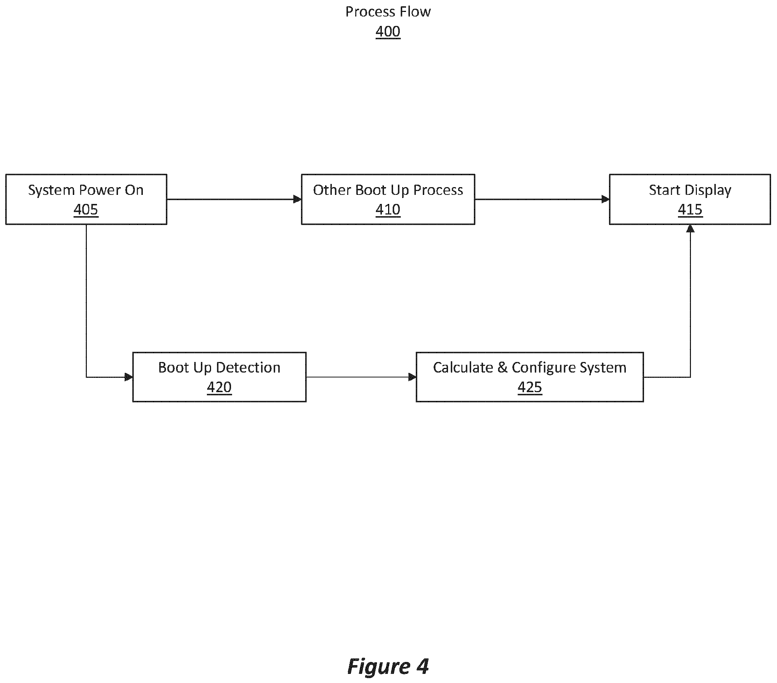

Figure 4 shows a process flow 400 generally outlining some of the example operations implemented by service 205 of Figure 2A. Process flow 400 includes a first set of operations, comprising a system power on 405, various other operations involved in the boot up process (e.g., as shown by other boot up process 410 which may involve setting up the display's temperature), and the eventual start of the display (e.g., as shown by start display 415). These processes are ones that have historically been performed by XR systems. The other boot up process 410 may consume some time, such as a number of seconds (e.g., often less than about 10-15 seconds). The disclosed embodiments are able to capitalize on that time spent for the other boot up process 410 to perform some additional operations (i.e. to concurrently perform other operations).

For instance, in parallel with operations 405, 410, and 415 are additional operations performed by service 205. To illustrate, service 205 is able to detect the boot up procedure (e.g., as shown by boot up detection 420). This may involve communicating with the system's BIOS or operating system to determine when the system is newly booting up.

When the system is detected as undergoing a boot up operation, service 205 is then triggered to calculate and configure the XR system (e.g., as shown by calculate & configure system 425) using updated and newly computed control parameters (e.g., control parameters 240 of Figure 2A). These control parameters are used to facilitate the display's startup, as shown by start display 415.

As a part of the calculate & configure system 425 operation, service 205 is able to determine the FS mirror's resonance. For instance, service 205 causes the XR system 210 to sweep (e.g., using a sine waveform with different frequencies) the drive signal to the FS mirror to find the FS mirror's resonance (which might drift due to dust collection or other environmental factors) before finalizing the start of the FS mirror. By performing this action, service 205 is able to obtain the latest FS mirror resonance characteristics. Based on this information, service 205 then causes the system to drive the FS mirror at its resonance so as to achieve maximum power efficiency.

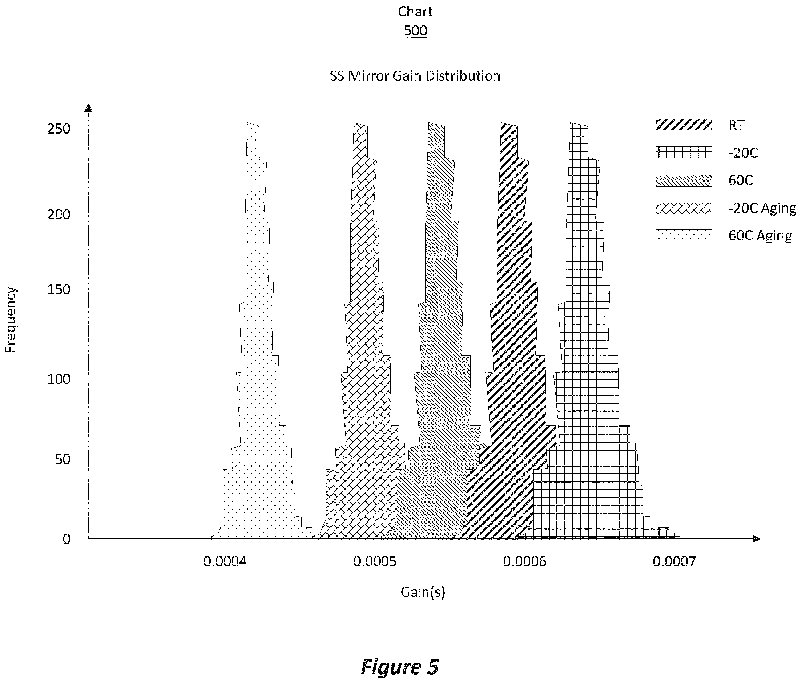

During the calculate & configure system 425 operation, service 205 also determines the SS mirror's gain. The SS mirror's gain is equal to the SS mirror's angle divided by the SS mirror's drive voltage. To achieve the desired field of view (FOV) and control loop stability, service 205 typically causes the SS mirror's gain to be a constant number. Figure 5 shows an example chart 500 outlining the SS mirror's gain variations at different temperatures and aging.

To mitigate the SS mirror's gain variation, service 205 detects the SS mirror's gain during the boot up sequence. Service 205 then applies compensation (e.g., by configuring the notch filter using the newly acquired control parameters) before the SS mirror finalizes its start up so as to achieve a correct FOV.

The SS mirror has multiple mode variations, as mentioned previously. For example purposes, Mode 3 will be the primary point of discussion moving forward. One will appreciate, however, how similar principles can be employed for modes M1 and M4.

As mentioned previously, M3 of the SS mirror can jump over time, resulting in the SS mirror's performance not being properly managed. Thus, it is desirable to re-calibrate the notch filter each time the XR system boots up.

The process of determining the notch filter's parameters is performed by driving the SS mirror with a triangle or pyramid wave (whereas the FS mirror is driven using a sinusoidal wave). The resonance frequencies for the FS mirror and the multiple resonance/modes of the SS mirror can be determined via the sweeping technique mentioned earlier; further, the resonance frequencies for both mirrors can be determined concurrently or in parallel with one another.

When the driving signal is a triangle waveform, the frequency harmonics of the driving signal may excite the resonant frequency components of the SS mirror and therefore distort the movements of the SS mirror. For instance, different responses from the SS mirror may cause rippling movements at the SS mirror's resonant frequency. The ripples may negatively impact the display image quality. The closer the harmonics are to the frequency components of the SS mirror, the worse the impact is. To overcome such image quality impacts, an error compensator (e.g., a proportional-integral-derivative (PID) controller) or a notch filter is used with dynamically controlled configurations that are optimized for the specific properties of the SS mirror.

Example embodiments described herein are capable of automatically adjusting notch frequencies of a notch filter to match with the varying parameters ( e.g. resonant frequencies) of an SS mirror. For example, an adaptive feedback may be introduced to track shifts in resonant frequencies of the SS mirror in a relatively wide range and suppress oscillations caused by those resonant frequencies. In accordance with this example, the adaptive feedback may change the notch frequencies of the notch filter to track the resonant frequencies.

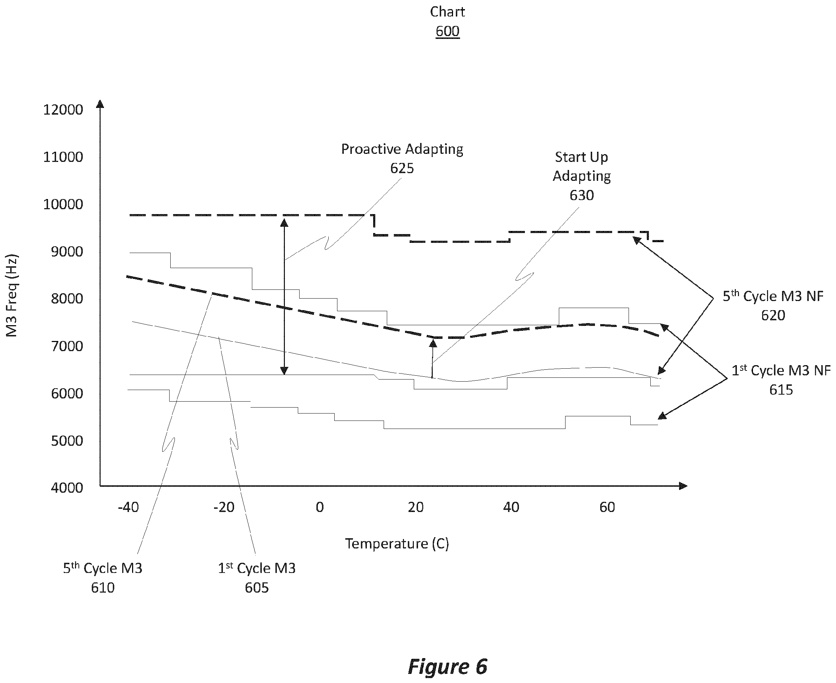

Figure 6 shows an example chart 600 outlining the boot up sweep operation used to detect resonance and to subsequently mitigate the M3 jumps. Generally, Figure 6 shows how boot up M3 detection helps service 205 to identify correct M3 behavior before the SS mirror starts. Then, the correct notch filter is configured in the system so as to protect the SS mirror.

Chart 600 shows a 1^{st} cycle M3 605, a 5^{th} cycle M3 610, a 1^{st} cycle M3 NF 615, a 5^{th} cycle M3 NF 620, a proactive adapting 625, and a start up adapting 630. It should be noted how the boot up detection algorithm is also used in the SS mirror's trajectory control, so it is not limited only to these use cases.

Figure 6 generally shows how modeling can be used to predict or model the behavior of the SS mirror. Despite this modeling, the display device (e.g., the mirrors) can still operate in unexpected ways, as shown in Figure 6 by the behavior profiles of the SS mirror shifting upward significantly from the modeled version. For instance, the lines labeled as 1^{st} cycle M3 NF 615 include a modeled plot (e.g., the solid line) and an actual plot (e.g., the dotted plot). The lines labeled as 5^{th} cycle M3 NF 620 similarly include a modeled plot (e.g., the solid line) and an actual plot (e.g., the dotted plot). Notice, the actual plots have shifted upward by a significant amount, exceeding the modeled prediction. Similarly, the 1^{st} cycle M3 605 corresponds to a modeled plot while the 5^{th} cycle M3 610 corresponds to an actual plot. It is particularly challenging to predict when this jump will occur. These challenges preclude the use of a traditional, fixed parameter notch filter.

During the lower processes illustrated in Figure 4 (e.g., the boot up detection 420, and the calculate & configure system 425), the embodiments are able to perform a sweep operation to determine the M3 resonance frequency of the SS mirror, as shown by the start up adapting 630.

Returning to Figure 2A, service 205 is able to perform the sweeping operation so as to determine the peak resonant frequency of the SS mirror. Based on this determined measurement, service 205 can then configure the notch filter by selecting and applying at which frequency the notch filter is to attenuate the drive signal for the SS mirror. Doing so reduces the peak amplitude of the SS mirror's frequency response, particular at the resonance frequency. This operation also helps ensure that the SS mirror will not break due to extreme oscillations at resonance.

That is, by notching out (i.e. attenuating) the peak in the resonant frequency, the system will become more stable. According to the principles disclosed herein, the characteristics of the peak can change based on various factors, including temperature, as generally shown by the gain characteristics illustrated in Figure 5. If the same notch filter were always used, it would not properly notch, cancel out, or attenuate the peak value.

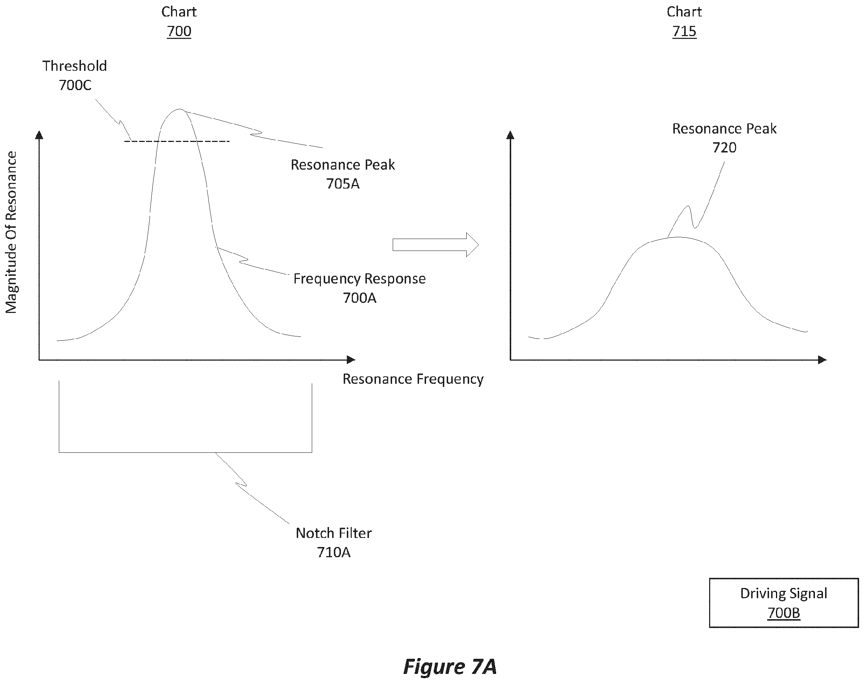

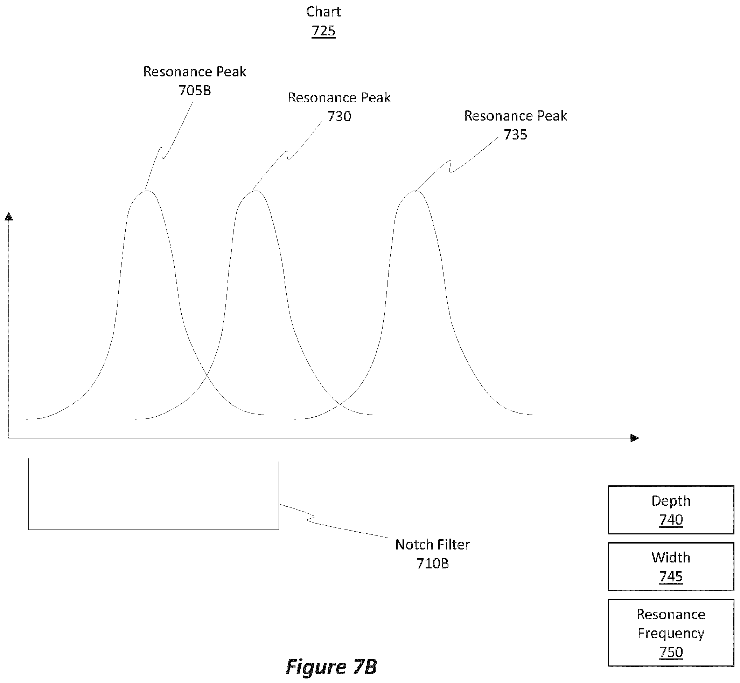

Figures 7A and 7B provide some additional insight. Figure 7A shows a first chart 700 illustrating a frequency response 700A of the SS mirror based on a driving signal 700B provided to the SS mirror. At the peak of the frequency response 700A is the resonance peak 705A. It might be the case that a resonance magnitude at or above the threshold 700C will lead to a destruction of the display device's SS mirror. Thus, it is desirable to attenuate or reduce the peak magnitude of the frequency response 700A by suppressing the driving signal 700B via use of a notch filter 710A (e.g., a type of dampener) applied to the driving signal 700B.

In this example, a notch filter 710A is applied to the driving signal of the SS mirror so as to reduce the overall magnitude of the resonance peak 705A. As mentioned previously, this gain reduction (which occurs as a result of applying the notch filter 710A) is performed in an effort to safeguard the SS mirror. The result of applying the notch filter 710A is shown in the chart 715. Chart 715 shows a reduced profile of the resonance peak, as shown by resonance peak 720, whose peak value is now lower than 0 dB.

In this manner, a magnitude of a frequency response of a combination of the adaptive notch filter and the SS mirror is modified to be substantially constant by suppressing at least one notch frequency in a frequency response of the SS mirror. In the example implementation of Figure 7A, the adaptive notch filter modifies the magnitude of the frequency response of the combination of the adaptive notch filter and the SS mirror to be substantially constant by suppressing at least one notch frequency in the frequency response of the SS mirror. If the characteristics of the SS mirror did not change, this technique would always be workable; however, the characteristics do change, as shown in Figure 7B.

Figure 7B shows a chart 725 outlining the original resonance peak 705B, which is representative of the resonance peak 705A from Figure 7A. Also shown is the notch filter 710B, which corresponds to the notch filter 710A of Figure 7A. The characteristics of the SS mirror change, resulting in modified behavior, as illustrated by the other peaks in Figure 7B (e.g., resonance peak 730 and resonance peak 735). If the same notch filter 710B were used, that notch filter 710B would have little-to-no dampening effect on the SS mirror's behavior.

Service 205 of Figure 2A is thus configured to determine updated control parameters 240 so as to apply an optimally configured (e.g., based on current characteristics) notch filter to the SS mirror's driving signal. Doing so helps ensure that the SS mirror operates within an acceptable range so the SS mirror does not break and so the SS mirror operates optimally. That is, notching out the peak helps stabilize the SS mirror. Thus, the disclosed embodiments enable the generation and use of dynamic parameters for a notch filter.

The disclosed embodiments are beneficially configured to determine the control parameters (e.g., the notch filter's depth 740, the notch filter's width 745, and the resonance frequency 750 (e.g., peak height and position)) based on the latest information obtained from the display device. Using these control parameters, the embodiments can then dynamically configure a notch filter. By frequently (e.g., at boot up) determining updated control parameters, the embodiments can avoid using ultra-wide or ultra-deep notch filters, the use of which might negatively impact the performance of the display device.

It should be noted how the XR system is often a battery-based system. The lifespan of the XR system's battery is often limited to a select number of hours (e.g., often 5-6 hours). The disclosed embodiments recalculate the notch filter's parameters each time the system is subjected to a boot up procedure, which often occurs when the XR system shuts down due to a depleted battery.

In some instances, in addition to (or as an alternative to) a re-boot procedure, the disclosed operations can be triggered each time the battery is being recharged. For instance, newly computed control parameters can be determined for the display device each time the device is being recharged. It might be the case that the device is not re-booted while it is being charged. Thus, some embodiments trigger the control parameter calculations if the device is being charged. In some instances, the embodiments trigger the control parameter calculations while the device is being charged only if a threshold amount of time has elapsed since the last re-calculation event.

For instance, consider a scenario where the threshold amount of time is set to 5 hours. In this example, the display device has been operating only for 3 hours when it is plugged in for charging. Under these conditions, the embodiments may refrain from triggering the re-calculation until the threshold amount of time has elapsed (and if the device is still charging). In some scenarios, the embodiments automatically trigger a re-calculation every set number of hours, regardless of whether the display device is re-booted and/or regardless of whether the display device is being charged. Thus, some embodiments follow a pre-defined periodic rate at which the control parameters are re-calculated. In some implementations, the re-calculation may be delayed if the display device is being actively used. The embodiments can delay the re-calculation until such time as the display device is detected as being in a non-active state.

Thus, it is often the case that new control parameters (e.g., the notch filter's parameters) are recalculated every select number of hours. While the display device's characteristics can change even within this limited time window, the amount of change within that window is below a threshold amount of change such that the parameters calculated at the beginning of the time period are sufficient for use throughout the entire time period. For instance, significant jumps typically will not happen every 5-6 hours, but they may happen between 20-100 hours. By frequently recalculating the control parameters, the disclosed embodiments are able to dynamically respond throughout time to accommodate changes / jumps that may occur.

If an error does occur where the display device is not operating properly, the display device can be re-booted. This new boot up of the unit will result in a recalculation of the control parameters and will result in the display device being re-calibrated based on the latest characteristics of the system. In this manner, the embodiments facilitate a self-calibration technique, and the embodiments can recover from an error state.

Referring back to the earlier discussion regarding the modes, the disclosed principles can help suppress modes M1, M3, and M4 in particular. That is, by determining (e.g., at boot time) and by applying the control parameters to the disclosed notch filter, the notch filter (e.g., negative gain) can successfully suppress the M1, M3, and M4 movements. Modes M6-M12 can generally be ignored. Modes M2 and M5 typically do not vary based on operational conditions, so constant control parameters (as opposed to dynamically computed control parameters) can be used to facilitate the suppression of movements in those modes.

### Example Methods

The following discussion now refers to a number of methods and method acts that may be performed. Although the method acts may be discussed in a certain order or illustrated in a flow chart as occurring in a particular order, no particular ordering is required unless specifically stated, or required because an act is dependent on another act being completed prior to the act being performed.

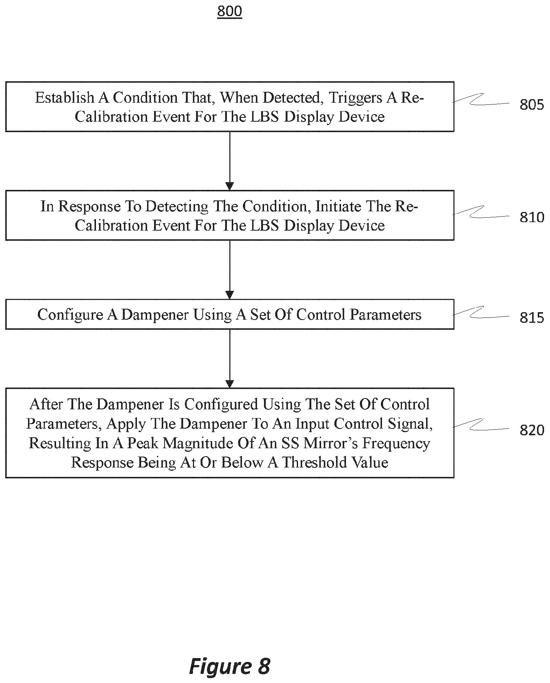

Attention will now be directed to Figure 8, which illustrates a flowchart of an example method 800 for re-calibration a laser beam scanning (LSB) display device. The LBS display device includes a fast scanning (FS) mirror and a slow scanning (SS) mirror. The LBS display device is driven by an input control signal. Method 800 can be implemented within the architecture 200 of Figure 2A. Also, method 800 can be performed by service 205. Optionally, method 800 can be implemented by the XR system 210, which is a type of computing system.

Method 800 includes an act (act 805) of establishing a condition that, when detected, triggers a re-calibration event for the LBS display device. The condition can be one (or a combination) of multiple conditions. For instance, the condition may be a boot up event for the computer system, a charging event for the computer system, or an elapse of a threshold amount of time since a previous re-calibration event (e.g., a determination that the threshold amount of time has elapsed). The condition may be a combination of multiple conditions comprising: a first condition in which the computer system is being charged and a second condition in which a threshold amount of time has elapsed since a previous re-calibration event.

In response to detecting the condition, act 810 includes initiating the re-calibration event for the LBS display device. The re-calibration event includes a number of operations. One operation includes determining a resonance frequency of the SS mirror. The resonance frequency of the SS mirror may be determined via a sweeping operation in which the SS mirror is driven using a triangular wave.

An optional operation includes determining a gain of the SS mirror. Optionally, the resonance frequency of the FS mirror can be determined. The resonance frequency of the FS mirror can be determined via a sweeping operation in which the FS mirror is driven using a sinusoidal wave. Another operation includes determining, based at least on the determined resonance frequency of the SS mirror, a set of control parameters for a dampener that will subsequently be applied to the input control signal. Optionally, the set of control parameters for the dampener may be determined, at least in part, by driving the SS mirror with a triangle wave.

In some implementations, the dampener is a notch filter. When the dampener is the notch filter, then the set of control parameters may include one or more of a depth for the notch filter, a width for the notch filter, or a frequency position for the notch filter. Thus, when the dampener is a notch filter, the set of control parameters may include: a depth for the notch filter, a width for the notch filter, and a frequency position for the notch filter.

The dampener, when applied to the input control signal, operates to attenuate a peak magnitude of a frequency response of the SS mirror to a peak value that is at or below a threshold value. The threshold value is one where, when the peak magnitude of the SS mirror's frequency response is at or below the threshold value, distorting movements of the SS mirror are dampened.

Act 815 includes configuring the dampener using the set of control parameters. When the condition mentioned previously is a boot up event for the system, the dampener may be configured using the set of control parameters prior to a finalization of the boot up event.

After the dampener is configured using the set of control parameters, act 820 includes applying the dampener to the input control signal resulting in the peak magnitude of the SS mirror's frequency response being at or below the threshold value.

Applying the dampener to the input control signal results in suppression of at least one of a Mode 1 movement of the SS mirror, a Mode 3 movement of the SS mirror, or a Mode 4 movement of the SS mirror. It should also be noted how the frequency response of the SS mirror may change between each detection of the condition. As a result, the embodiments are beneficially able to generate new control parameters.

### Example Computer / Computer systems

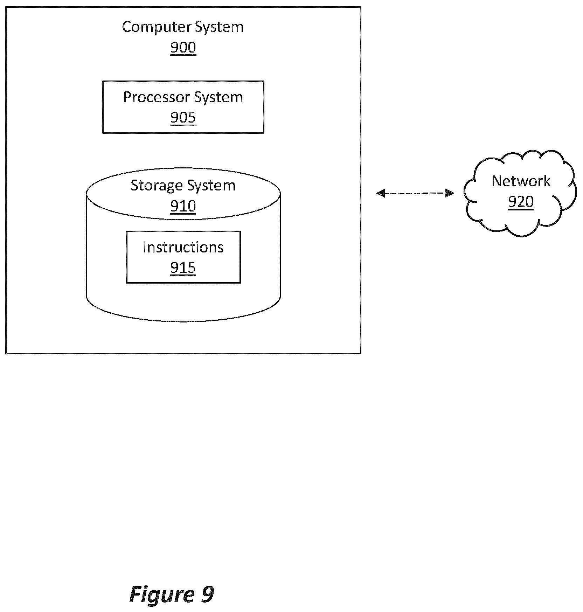

Attention will now be directed to Figure 9 which illustrates an example computer system 900 that may include and/or be used to perform any of the operations described herein. For instance, computer system 900 can be in the form of the XR system 210 of Figure 2A and can implement the service 205.

Computer system 900 may take various different forms. For example, computer system 900 may be embodied as a tablet, a desktop, a laptop, a mobile device, or a standalone device, such as those described throughout this disclosure. Computer system 900 may also be a distributed system that includes one or more connected computing components/devices that are in communication with computer system 900.

In its most basic configuration, computer system 900 includes various different components. Figure 9 shows that computer system 900 includes a processor system 905 that includes one or more processor(s) (aka a "hardware processing unit") and a storage system 910.

Regarding the processor(s) of the processor system 905, it will be appreciated that the functionality described herein can be performed, at least in part, by one or more hardware logic components (e.g., the processor(s)). For example, and without limitation, illustrative types of hardware logic components/processors that can be used include Field-Programmable Gate Arrays ("FPGA"), Program-Specific or Application-Specific Integrated Circuits ("ASIC"), Program-Specific Standard Products ("ASSP"), System-On-A-Chip Systems ("SOC"), Complex Programmable Logic Devices ("CPLD"), Central Processing Units ("CPU"), Graphical Processing Units ("GPU"), or any other type of programmable hardware.

As used herein, the terms "executable module," "executable component," "component," "module," "service," or "engine" can refer to hardware processing units or to software objects, routines, or methods that may be executed on computer system 900. The different components, modules, engines, and services described herein may be implemented as objects or processors that execute on computer system 900 (e.g. as separate threads).

Storage system 910 may be physical system memory, which may be volatile, non-volatile, or some combination of the two. The term "memory" may also be used herein to refer to non-volatile mass storage such as physical storage media. If computer system 900 is distributed, the processing, memory, and/or storage capability may be distributed as well.

Storage system 910 is shown as including executable instructions 915. The executable instructions 915 represent instructions that are executable by the processor(s) the processor system 905 to perform the disclosed operations, such as those described in the various methods.

The disclosed embodiments may comprise or utilize a special-purpose or general-purpose computer including computer hardware, such as, for example, one or more processors and system memory, as discussed in greater detail below. Embodiments also include physical and other computer-readable media for carrying or storing computer-executable instructions and/or data structures. Such computer-readable media can be any available media that can be accessed by a general-purpose or special-purpose computer system. Computer-readable media that store computer-executable instructions in the form of data are "physical computer storage media" or a "hardware storage device." Furthermore, computer-readable storage media, which includes physical computer storage media and hardware storage devices, exclude signals, carrier waves, and propagating signals. On the other hand, computer-readable media that carry computer-executable instructions are "transmission media" and include signals, carrier waves, and propagating signals. Thus, by way of example and not limitation, the current embodiments can comprise at least two distinctly different kinds of computer-readable media: computer storage media and transmission media.

Computer storage media (aka "hardware storage device") are computer-readable hardware storage devices, such as RAM, ROM, EEPROM, CD-ROM, solid state drives ("SSD") that are based on RAM, Flash memory, phase-change memory ("PCM"), or other types of memory, or other optical disk storage, magnetic disk storage or other magnetic storage devices, or any other medium that can be used to store desired program code means in the form of computer-executable instructions, data, or data structures and that can be accessed by a general-purpose or special-purpose computer.

Computer system 900 may also be connected (via a wired or wireless connection) to external sensors (e.g., one or more remote cameras) or devices via a network 920. For example, computer system 900 can communicate with any number devices or cloud services to obtain or process data. In some cases, network 920 may itself be a cloud network. Furthermore, computer system 900 may also be connected through one or more wired or wireless networks to remote/separate computer systems(s) that are configured to perform any of the processing described with regard to computer system 900.

A "network," like network 920, is defined as one or more data links and/or data switches that enable the transport of electronic data between computer systems, modules, and/or other electronic devices. When information is transferred, or provided, over a network (either hardwired, wireless, or a combination of hardwired and wireless) to a computer, the computer properly views the connection as a transmission medium. Computer system 900 will include one or more communication channels that are used to communicate with the network 920. Transmissions media include a network that can be used to carry data or desired program code means in the form of computer-executable instructions or in the form of data structures. Further, these computer-executable instructions can be accessed by a general-purpose or special-purpose computer. Combinations of the above should also be included within the scope of computer-readable media.

Upon reaching various computer system components, program code means in the form of computer-executable instructions or data structures can be transferred automatically from transmission media to computer storage media (or vice versa). For example, computer-executable instructions or data structures received over a network or data link can be buffered in RAM within a network interface module (e.g., a network interface card or "NIC") and then eventually transferred to computer system RAM and/or to less volatile computer storage media at a computer system. Thus, it should be understood that computer storage media can be included in computer system components that also (or even primarily) utilize transmission media.

Computer-executable (or computer-interpretable) instructions comprise, for example, instructions that cause a general-purpose computer, special-purpose computer, or special-purpose processing device to perform a certain function or group of functions. The computer-executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the embodiments may be practiced in network computing environments with many types of computer system configurations, including personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, and the like. The embodiments may also be practiced in distributed system environments where local and remote computer systems that are linked (either by hardwired data links, wireless data links, or by a combination of hardwired and wireless data links) through a network each perform tasks (e.g. cloud computing, cloud services and the like). In a distributed system environment, program modules may be located in both local and remote memory storage devices.

The present invention may be embodied in other specific forms without departing from its characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

### Example Clauses

Clause A. A computer system comprising: a laser beam scanning (LBS) display device comprising a fast scanning (FS) mirror and a slow scanning (SS) mirror, the LBS display device being driven by an input control signal; a processor system; and a storage system that stores instructions that are executable by the processor system to cause the computer system to: establish a condition that, when detected, triggers a re-calibration event for the LBS display device; in response to detecting the condition, initiate the re-calibration event for the LBS display device, wherein the re-calibration event comprises: determining a resonance frequency of the SS mirror; based on the determined resonance frequency, determining a set of control parameters for a dampener that will subsequently be applied to the input control signal, wherein: the dampener, when applied to the input control signal, operates to attenuate a peak magnitude of a frequency response of the SS mirror to a peak value that is at or below a threshold value, and the threshold value is one where, when the peak magnitude of the SS mirror's frequency response is at or below the threshold value, distorting movements of the SS mirror are dampened; configure the dampener using the set of control parameters; and after the dampener is configured using the set of control parameters, apply the dampener to the input control signal resulting in the peak magnitude of the SS mirror's frequency response being at or below the threshold value.

Clause B. The computer system of clause A, wherein the dampener is a notch filter.

Clause C. The computer system of clause B, wherein the set of control parameters includes a depth for the notch filter.

Clause D. The computer system of clause B, wherein the set of control parameters includes a width for the notch filter.

Clause E. The computer system of clause B, wherein the set of control parameters includes a frequency position for the notch filter.

Clause F. The computer system of clause A, wherein the condition is a boot up event for the computer system.

Clause G. The computer system of clause A, wherein the condition is a charging event for the computer system.

Clause H. The computer system of clause A, wherein the condition is an elapse of a threshold amount of time since a previous re-calibration event.

Clause I. The computer system of clause A, wherein the condition is a combination of multiple conditions comprising: a first condition in which the computer system is being charged and a second condition in which a threshold amount of time has elapsed since a previous re-calibration event.

Clause J. The computer system of clause A, wherein the condition is a boot up event for the computer system, and wherein the dampener is configured using the set of control parameters prior to a finalization of the boot up event.

Clause K. An extended reality (XR) system comprising: a laser beam scanning (LBS) display device comprising a fast scanning (FS) mirror and a slow scanning (SS) mirror, the LBS display device being driven by an input control signal; a processor system; and a storage system that stores instructions that are executable by the processor system to cause the XR system to: establish a condition that, when detected, triggers a re-calibration event for the LBS display device; in response to detecting the condition, initiate the re-calibration event for the LBS display device, wherein the re-calibration event comprises: determining a resonance frequency of the SS mirror; based on the determined resonance frequency, determining a set of control parameters for a dampener that will subsequently be applied to the input control signal, wherein: the dampener, when applied to the input control signal, operates to attenuate a peak magnitude of a frequency response of the SS mirror to a peak value that is at or below a threshold value, and the threshold value is one where, when the peak magnitude of the SS mirror's frequency response is at or below the threshold value, distorting movements of the SS mirror are dampened; configure the dampener using the set of control parameters; and after the dampener is configured using the set of control parameters, apply the dampener to the input control signal resulting in the peak magnitude of the SS mirror's frequency response being at or below the threshold value.

Clause L. The XR system of clause K, wherein the dampener is a notch filter, and wherein the set of control parameters includes: a depth for the notch filter, a width for the notch filter, and a frequency position for the notch filter.

Clause M. The XR system of clause K, wherein the condition is one of: a boot up event for the XR system, a charging event for the XR system, or a determination that a threshold amount of time has elapsed since a previous re-calibration event.

Clause N. The XR system of clause K, wherein the condition is a boot up event for the XR system, and wherein the dampener is configured using the set of control parameters prior to a finalization of the boot up event.

Clause O. The XR system of clause K, wherein the resonance frequency of the SS mirror is determined via a sweeping operation in which the SS mirror is driven using a triangular wave.

Clause P. The XR system of clause K, wherein the set of control parameters for the dampener is determined, at least in part, by driving the SS mirror with a triangle wave.

Clause Q. A method involving a laser beam scanning (LBS) display device comprising a fast scanning (FS) mirror and a slow scanning (SS) mirror, the LBS display device being driven by an input control signal, wherein the method comprises: establishing a condition that, when detected, triggers a re-calibration event for the LBS display device; in response to detecting the condition, initiating the re-calibration event for the LBS display device, wherein the re-calibration event comprises: determining a resonance frequency of the SS mirror; based on the determined resonance frequency, determining a set of control parameters for a dampener that will subsequently be applied to the input control signal, wherein: the dampener, when applied to the input control signal, operates to attenuate a peak magnitude of a frequency response of the SS mirror to a peak value that is at or below a threshold value, and the threshold value is one where, when the peak magnitude of the SS mirror's frequency response is at or below the threshold value, distorting movements of the SS mirror are dampened; configuring the dampener using the set of control parameters; and after the dampener is configured using the set of control parameters, applying the dampener to the input control signal resulting in the peak magnitude of the SS mirror's frequency response being at or below the threshold value.

Clause R. The method of clause Q, wherein applying the dampener to the input control signal results in suppression of a Mode 3 movement of the SS mirror, the Mode 3 movement being one of the distorting movements.

Clause S. The method of clause Q, wherein applying the dampener to the input control signal results in suppression of at least one of a Mode 1 movement of the SS mirror, a Mode 3 movement of the SS mirror, or a Mode 4 movement of the SS mirror.

Clause T. The method of clause Q, wherein the frequency response of the SS mirror changes between each detection of the condition.

In summary, techniques for determining parameters for a dampener are disclosed. A system includes a laser beam scanning (LBS) display device comprising FS and SS mirrors. The LBS display device is driven by an input control signal. In response to detecting a condition, a service initiates a re-calibration event for the LBS display device. This event involves the determination of control parameters for a dampener that will be applied to the input control signal. The dampener operates to attenuate a peak magnitude of a frequency response of the SS mirror to a peak value that is at or below a threshold value. The service configures the dampener using the control parameters. The service then applies the dampener to the input control signal, resulting in the peak magnitude of the SS mirror's frequency response being at or below the threshold value.

## Claims

1. A computer system (900) comprising:
a laser beam scanning, LBS, display device (315) comprising a fast scanning, FS, mirror (320) and a slow scanning, SS, mirror (325), the LBS display device being driven by an input control signal (330);
a processor system (905); and
a storage system (910) that stores instructions that are executable by the processor system to cause the computer system to:
establish (805) a condition that, when detected, triggers a re-calibration event for the LBS display device;
in response to detecting the condition, initiate (810) the re-calibration event for the LBS display device, wherein the re-calibration event comprises:
determining a resonance frequency of the SS mirror;
based on the determined resonance frequency, determining a set of control parameters for a dampener that will subsequently be applied to the input control signal, wherein:
the dampener, when applied to the input control signal, operates to attenuate a peak magnitude of a frequency response of the SS mirror to a peak value that is at or below a threshold value, and
the threshold value is one where, when the peak magnitude of the SS mirror's frequency response is at or below the threshold value, distorting movements of the SS mirror are dampened;
configure (815) the dampener using the set of control parameters; and
after the dampener is configured using the set of control parameters, apply (820) the dampener to the input control signal resulting in the peak magnitude of the SS mirror's frequency response being at or below the threshold value.

2. The computer system of claim 1, wherein the dampener is a notch filter.

3. The computer system of claim 2, wherein the set of control parameters includes a depth for the notch filter.

4. The computer system of claim 2, wherein the set of control parameters includes a width for the notch filter.

5. The computer system of claim 2, wherein the set of control parameters includes a frequency position for the notch filter.

6. The computer system of claim 1, wherein the condition is a boot up event for the computer system.

7. The computer system of claim 1, wherein the condition is a charging event for the computer system.

8. The computer system of claim 1, wherein the condition is an elapse of a threshold amount of time since a previous re-calibration event.

9. The computer system of claim 1, wherein the condition is a combination of multiple conditions comprising: a first condition in which the computer system is being charged and a second condition in which a threshold amount of time has elapsed since a previous re-calibration event.

10. The computer system of claim 1, wherein the condition is a boot up event for the computer system, and wherein the dampener is configured using the set of control parameters prior to a finalization of the boot up event.

11. The computer system of claim 1, wherein the computer system is an extended reality, XR, system.

12. A method (800) involving a laser beam scanning, LBS, display device (315) comprising a fast scanning, FS, mirror (320) and a slow scanning, SS, mirror (325), the LBS display device being driven by an input control signal (330), wherein the method comprises:
establishing (805) a condition that, when detected, triggers a re-calibration event for the LBS display device;
in response to detecting the condition, initiating (810) the re-calibration event for the LBS display device, wherein the re-calibration event comprises:
determining a resonance frequency of the SS mirror;
based on the determined resonance frequency, determining a set of control parameters for a dampener that will subsequently be applied to the input control signal, wherein:
the dampener, when applied to the input control signal, operates to attenuate a peak magnitude of a frequency response of the SS mirror to a peak value that is at or below a threshold value, and
the threshold value is one where, when the peak magnitude of the SS mirror's frequency response is at or below the threshold value, distorting movements of the SS mirror are dampened;
configuring (815) the dampener using the set of control parameters; and
after the dampener is configured using the set of control parameters, applying (820) the dampener to the input control signal resulting in the peak magnitude of the SS mirror's frequency response being at or below the threshold value.

13. The method of claim 12, wherein applying the dampener to the input control signal results in suppression of a Mode 3 movement of the SS mirror, the Mode 3 movement being one of the distorting movements.

14. The method of claim 12, wherein applying the dampener to the input control signal results in suppression of at least one of a Mode 1 movement of the SS mirror, a Mode 3 movement of the SS mirror, or a Mode 4 movement of the SS mirror.

15. The method of claim 12, wherein the frequency response of the SS mirror changes between each detection of the condition.
